# EUROPEAN PATENT APPLICATION

(11) **EP 4 593 516 A1**
(43) Date of publication of application: **30.07.2025**
(21) Application number: 23868443.5
(22) Date of filing: 05.09.2023
(51) Int. Cl.: H04W 76/15, H04W 76/12, H04W 76/14, H04W 24/10, H04W 88/04

(54) **DUPLICATE TRANSMISSION METHOD USING MULTIPATH**

(30) Priority: 21.09.2022 US 202263408477 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2023/013238
(87) International publication number: WO 2024/063388

(57) **Abstract**

One disclosure of the present disclosure provides a method by which a remote UE performs communication. The method comprises the steps of: receiving, from a first AMF, an establishment request message of a first PDU session for a relay UE; establishing an N4 session for the first PDU session with a first UPF, wherein the relay UE relays an indirect path through the first PDU session for the remote UE; receiving a remote UE report from the first AMF, wherein the remote UE report includes ULI information of the relay UE; receiving, from a second AMF, an establishment request message of an MA PDU session for the remote UE, wherein the MA PDU session is through a non-3GPP access by the indirect path and a 3GPP access by a direct path and the establishment request message of the MA PDU session includes ULI information of the remote UE; establishing an N4 session for the MA PDU session with a second UPF; and determining whether to apply duplicate transmission through the MA PDU session on the basis of the ULI information of he relay UE and the ULI information of the remote UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DISCLOSURE

### TECHNICAL PROBLEM

The question is how to determine whether to apply redundant transmission through multipath.

### TECHNICAL SOLUTION

SMF can receive ULI information of relay UE and remote UE and determine whether to apply redundant transmission based on this.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5 and 6 show an example of a PDU session establishment procedure to which implementations of the present disclosure is applied.
FIG. 7 illustrates an example of redundant user plane paths using dual connectivity.
FIG. 8 is an example diagram showing a scenario of multipath transmission.
FIGS. 9a and 9b are exemplary diagrams showing a procedure according to the first embodiment.
FIGS. 10a, 10b and 10c are exemplary diagrams showing a procedure according to the second embodiment.
FIG. 11 shows the procedure of the SMF for the disclosure of this specification.
FIG. 12 shows the procedure of the remote UE for the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

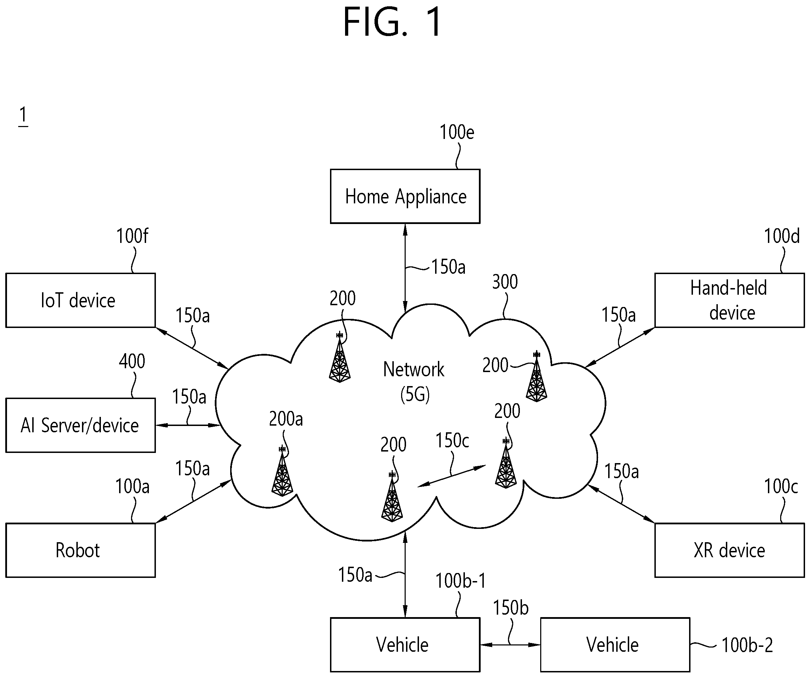

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

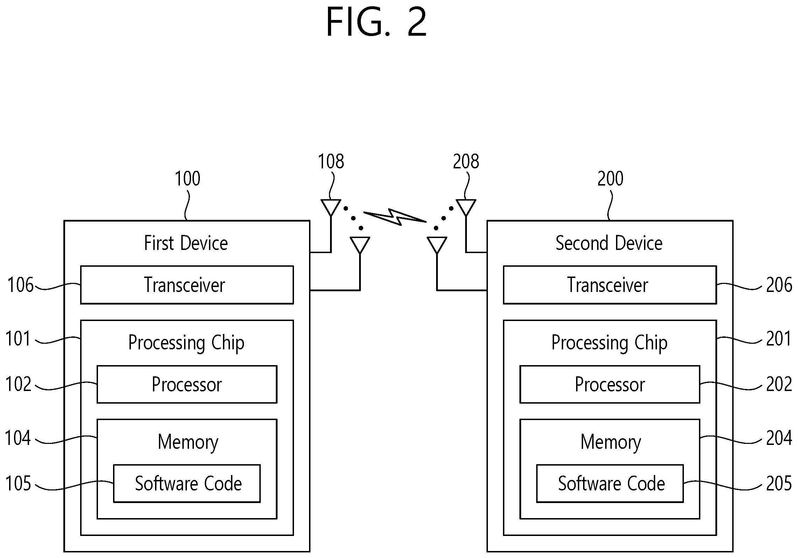

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

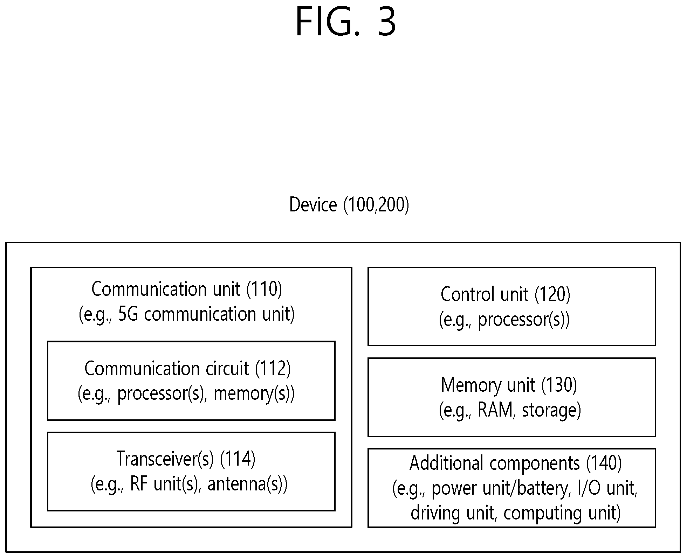

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

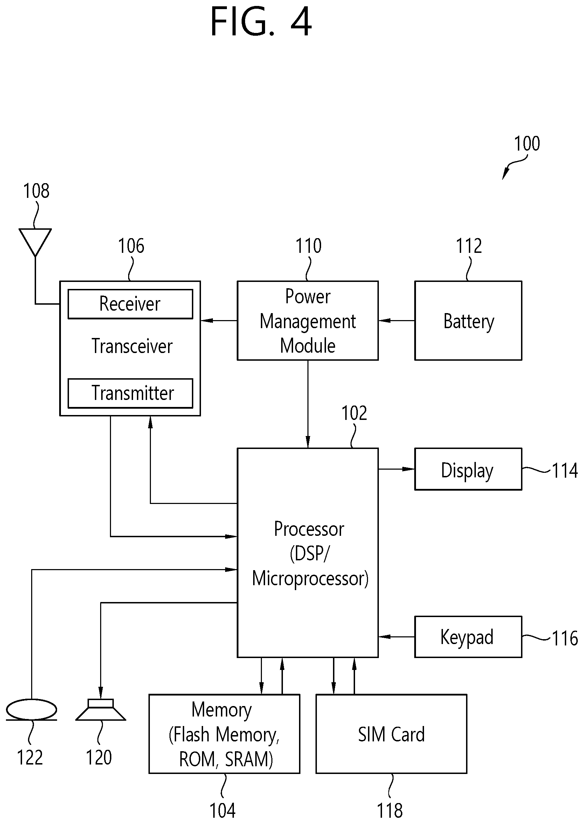

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

### <PDU session establishment procedure>

A PDU session establishment procedure is described. Section 4.3.2 of 3GPP TS 23.502 V16.3.0 (2019-12) can be referred.

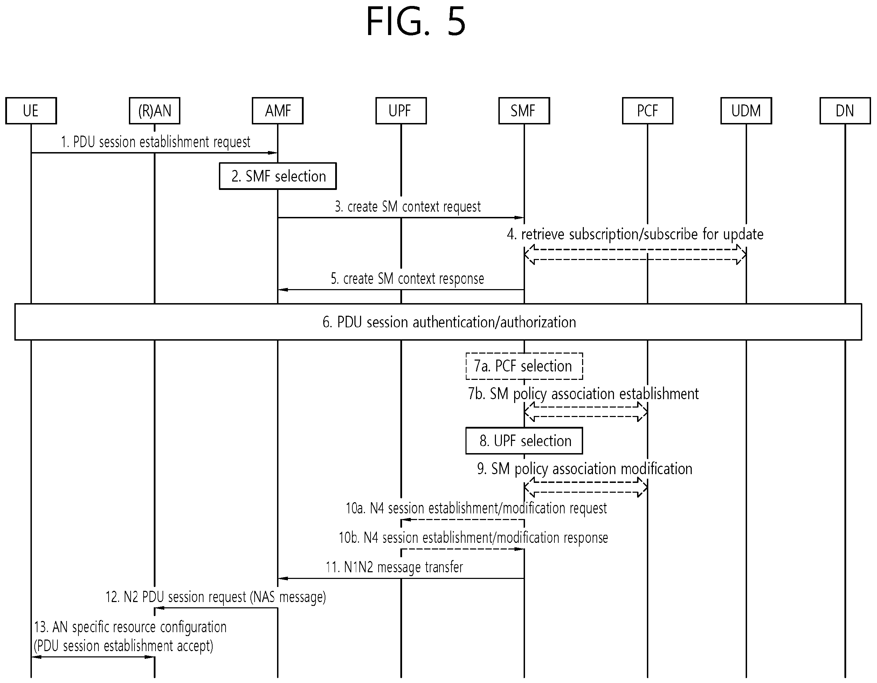

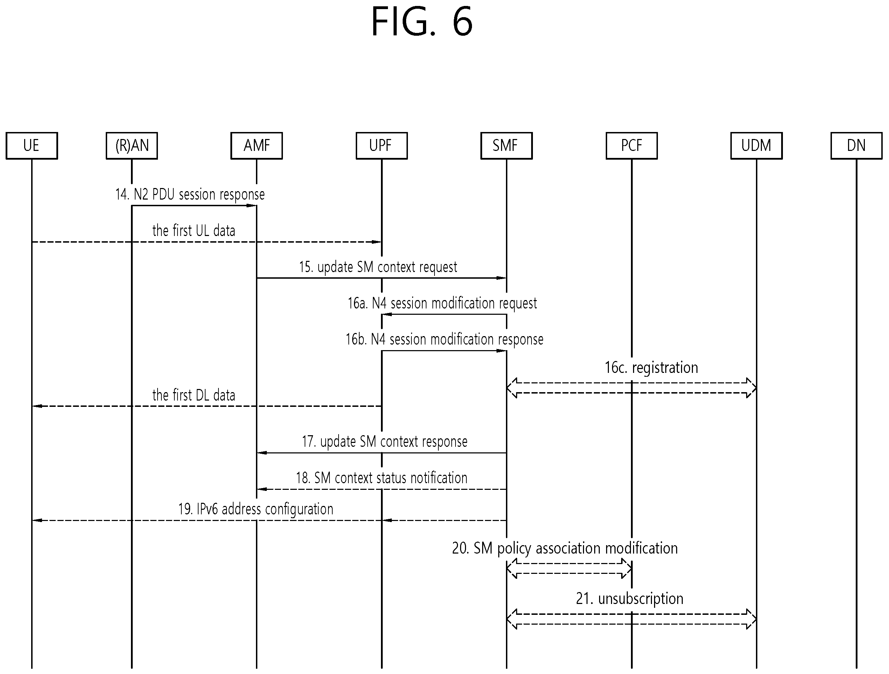

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a differentAMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN,
- the SMF ID corresponding to the PDU session ID belongs to the HPLMN,

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_ PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### < Redundant PDU session>

To support highly reliable URLLC (Ultra-Reliable and Low Latency Communication) services, a UE (User Equipment) may establish two redundant PDU sessions over a 5G network. This may be used for applications requiring high reliability. The two PDU sessions may be managed by different network nodes. The same data may be transmitted through both PDU sessions.

The 5GS (5G System) may configure the user plane paths of the two redundant PDU sessions to be disjoint. The user's subscription data indicates whether the user is allowed to have redundant PDU sessions, and this information can be provided from the UDM (Unified Data Management) to the SMF (Session Management Function).

The RAN (Radio Access Network) supports dual connectivity, and there may be sufficient RAN coverage in the target area for dual connectivity. The UE may support dual connectivity. The core network UPF (User Plane Function) deployment aligns with the RAN deployment and may support redundant user plane paths. The underlying transport topology is consistent with the RAN and UPF deployments and may enable redundant user plane paths. The geographical distribution of physical network topology and functions may support redundant user plane paths to the extent deemed necessary by the operator. The operation of redundant user plane paths may be sufficiently independent to the level required by the operator.

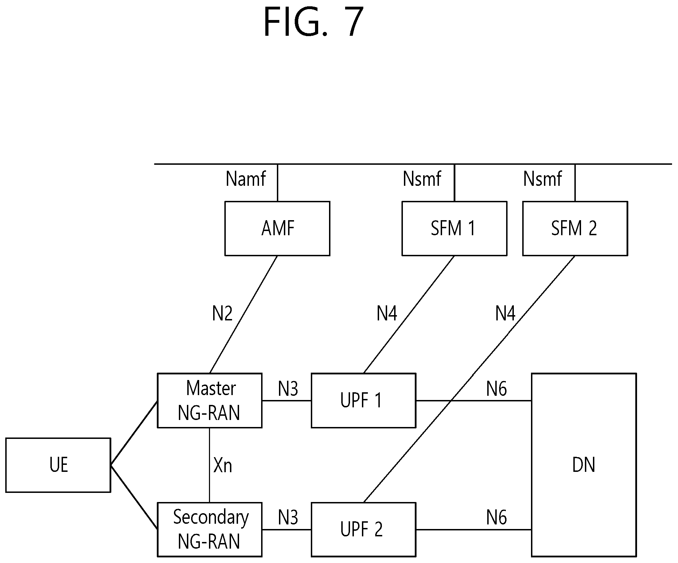

**FIG. 7** **illustrates an example of redundant user plane paths using dual connectivity.**

FIG. 7 illustrates an example of user plane resource configuration for redundant PDU sessions when redundant PDU sessions are implemented. One PDU session spans from the UE through the Master NG-RAN to UPF1, which acts as the PDU session anchor. The other PDU session spans from the UE through the Secondary NG-RAN to UPF2, which also serves as a PDU session anchor. The NG-RAN may realize redundant user plane resources for the two PDU sessions using either two NG-RAN nodes (Master NG-RAN and Secondary NG-RAN) or a single NG-RAN node. In both cases, there is a single N1 interface for the AMF.

Based on these two PDU sessions, two independent user plane paths may be established. Although traffic through UPF1 and UPF2 may be routed via different user plane nodes within the DN (Data Network), UPF1 and UPF2 may be connected to the same DN.

To establish two redundant PDU sessions and associate redundant traffic from the same application with these sessions, the UE Route Selection Policy (URSP) or UE-local configuration may be used.

When using URSP, redundant traffic from applications associated with redundant PDU sessions may be distinguished by two unique traffic descriptors in separate URSP rules. Since these traffic descriptors must have different DNNs, IP descriptors, or non-IP descriptors (e.g., MAC addresses, VLAN IDs), the two redundant PDU sessions may match the route selection descriptors of their respective URSP rules.

Redundant user plane configurations may be applied to both IP and Ethernet PDU sessions.

Support for redundant PDU sessions includes the following:
- The UE may initiate two redundant PDU sessions, and provide a distinct combination of DNN and S-NSSAI for each of the two redundant PDU sessions.
- The SMF determines whether to treat a PDU session as redundant. If dynamic PCC (Policy and Charging Control) is applied to the PDU session or a combination of S-NSSAI, DNN, user subscription, and SMF-local policy settings, this determination may be based on an indication that redundant PDU sessions must be provisioned by the PCF for the session. If a PDU session is treated as redundant, the SMF uses S-NSSAI and DNN to distinguish the redundant PDU sessions and determines the RSN (Redundancy Sequence Number) value, which indicates the redundant user plane requirements for PDU session of the NG-RAN.
- Operator configurations for UPF selection may ensure appropriate UPF choices for disjoint paths.
- When a PDU session is established or transitions to the CM-CONNECTED state is performed, the RSN parameter informs the NG-RAN that redundant user plane resources must be provided for the PDU session via dual connectivity. The RSN value reflects the redundant user plane requirements for the session. This request for redundant processing may be performed by indicating an RSN to the NG-RAN node on a per PDU session basis. PDU sessions with different RSN values may be realized by distinct redundant UP resources. Based on RSN and RAN configurations, the NG-RAN establishes dual connectivity to ensure end-to-end redundant paths. When the RSN parameter is set and there are multiple PDU sessions with different RSN values, this means that the Core Network (CN) requests dual connectivity setup and the user plane has configured the RSN parameter and the associated RAN configuration. When the RSN value is provided to the NG-RAN, the NG-RAN considers the RSN value when associating the PDU session with the NG-RAN UP.

The decision to establish dual connectivity may be made by the NG-RAN. The NG-RAN may consider additional requests for dual connectivity setup provided by the CN.
- Using the NG-RAN local configuration, the NG-RAN may decide whether the RAN resource setup request for a PDU session is satisfied by considering the user plane requirements indicated by the RSN parameters through the dual connectivity. If the RAN resource setup request for a PDU session can be performed by the RAN, the PDU session may be established even if the user plane requirements indicated by the RSN cannot be satisfied. If the NG-RAN decides that the request to establish RAN resources cannot be fulfilled, it rejects the request which ultimately triggers the SMF to reject the PDU session establishment for the UE. The decision for each PDU session may be made independently. For example, rejection of a PDU session request may not release a previously established PDU session. The RAN shall decide whether to notify the SMF when it can no longer maintain the RAN resources indicated by the RSN parameters, and the SMF shall use this to decide whether the PDU session should be released.
- For Ethernet PDU sessions, SMF changes UPF (PSA role) and Secondary NG-RAN is modified (or added/released) using Ethernet PDU session anchor relocation procedure.
- Charging records in SMF may reflect RSN information.
- RSN indication is delivered from Source NG-RAN to Target NG-RAN in case of handover.

### <Multi-path>

The UE may receive connection services from the network in the following ways:
- Direct Path (Direct Network Communication): The UE receives services directly from the network without going through the UE-to-Network Relay.
- Indirect Path (Indirect Network Communication): The UE indirectly receives services from the network through the UE-to-Network Relay.

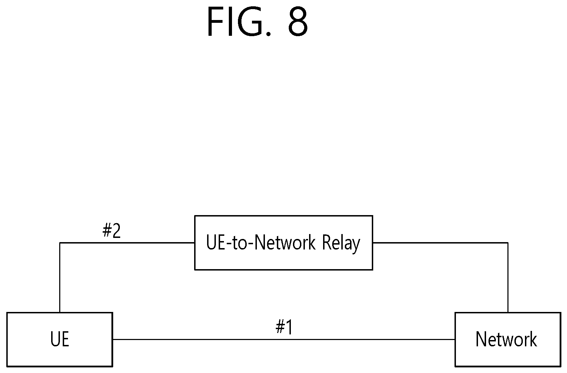

**FIG. 8** **is an example diagram showing a scenario of multipath transmission.**

Multipath transmission using only one direct network communication path (direct path) and one indirect network communication path (indirect path) using the UE-to-Network Relay may be used to improve the stability or data rate of the remote UE. The UE may use path #1 and path #2 for multipath transmission, where path #1 is the direct network communication path (direct path) and path #2 is the indirect network communication path (indirect path) using the UE-to-Network Relay.

A method for efficiently supporting redundant transmission in multipath is a problem.

### <Disclosure of the present specification>

In order to solve the problem, the following methods are proposed in this specification. The methods presented below may be performed or used in combination or complementary manner. The content proposed below is written assuming Layer-3 UE-to-Network Relay, but may be equally applied to Relay 2 UE-to-Network Relay.

A remote UE may establish a PC5 connection with a relay UE and perform communication through an indirect path.

There may be model A and model B for establishing a PC5 connection.

In model A, a relay UE may broadcast (announce) a UE-to-Network Relay Discovery Announcement to multiple remote UEs. Then, a remote UE that receives this may select a relay UE by considering conditions. Through this, a PC5 connection may be established.

In model B, a remote UE may transmit a UE-to-Network Relay Discovery Solicitation to multiple relay UEs. A relay UE that receives this may transmit a UE-to-Network Relay Discovery Response to the remote UE by considering conditions. Through this, a PC5 connection may be established.

### I. First embodiment

In the first embodiment, the SMF may determine whether redundant transmission is performed based on the ULI (User Location Information) of the Remote UE and the ULI information of the Relay UE.

The Relay UE may establish a PDU session to transmit traffic for the Remote UE. The Relay UE is configured with an RSC (Relay Service Code), and information on which PDU session parameters (PDU Session type, DNN, SSC Mode, S-NSSAI, Access Type Preference) to be used for each RSC. Based on this configuration, when the Remote UE establishes a PC5 connection using a specific RSC, the relay UE may determine which PDU session parameter to use to create the PDU session. If redundant transmission is required in the application, a specific DNN/S-NSSAI may be configured to be used and the same SMF may be selected when creating a PDU session through the DNN/S-NSSAI. If necessary, other PDU session parameters may also be considered. For example, the same SMF may be selected only when a specific SSC mode is used.

Then, the SMF selected when the terminal (remote UE) directly creates a MA PDU session using the Uu interface (direct path) and the SMF selected when the relay UE establishes a PDU session transmitting traffic for the remote UE may be selected identically.

The relay UE may transmit information about the remote UE to the network through the Remote UE Report. Based on this, the SMF may recognize that the terminal established the MA PDU session through the direct path and the indirect path.

Also, based on the ULI (User Location Information) of the direct path of the Remote UE and the ULI of the Relay UE, the network may determine whether the Remote UE is attached to the same cell or a different cell as the Relay UE. The SMF may determine whether the cell along the direct path of the Remote UE is the same cell or a different cell as the serving cell of the relay UE, based on the ULI of the direct path of the Remote UE and the ULI of the Relay UE.

If necessary, the SMF may perform a UE mobility event subscription for location reporting for the Remote UE/Relay UE to the AMF. Then, when a mobility event occurs due to movement of the UE, the AMF may report the change in the location of the UE to the SMF.

In addition, the SMF may be aware of i) NG-RAN TEID / UPF TEID information for the PDU session (for the indirect path) that the Relay UE established for the Remote UE and ii) AN TEID / UPF TEID information for the MA PDU session (for the direct path) that the Remote UE uses via the direct path. Based on this information, the SMF may determine/judge whether to perform redundant transmission via the MA PDU session. For example, the SMF may determine/judge that redundant transmission is necessary in the following cases:
- When the cell of the direct path of the Remote UE and the cell of the Relay UE (indirect path) are different
- When the CN path of the Remote UE and the CN path of the Relay UE are disjoint
- When both of the above conditions are met (when the cells are different and the CN paths are disjoint)

In addition, since information about the Remote UE is not transmitted to the PCF, in order to use the proposed method, the PCF must not be used for the DNN/S-NSSAI used for the MA PDU session. The PCF may be prevented from being used for a specific DNN/S-NSSAI through the network configuration.

The following drawings are created to explain specific examples of this specification. The names of specific devices or names of specific signals/messages/fields described in the drawings are presented as examples, and therefore, the technical features of this specification are not limited to the specific names used in the drawings below.

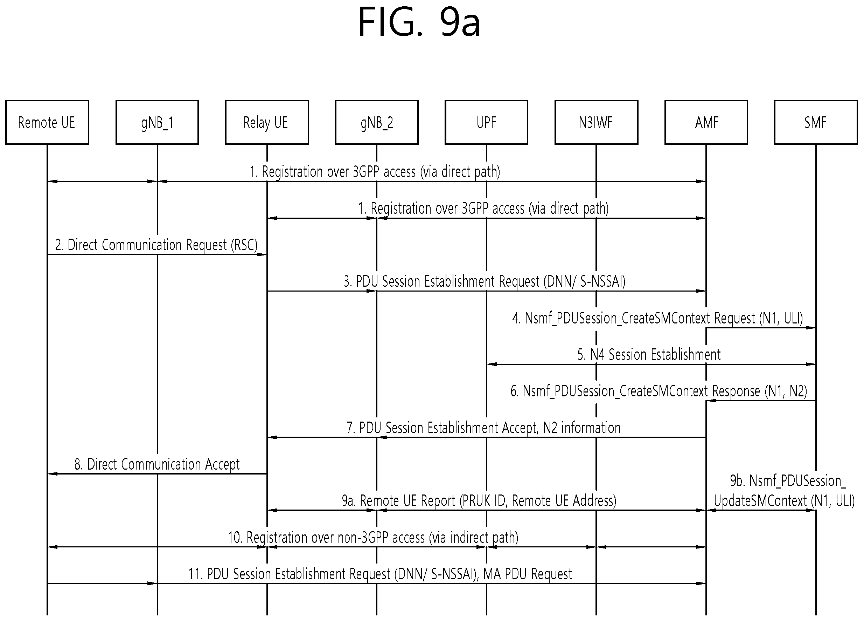

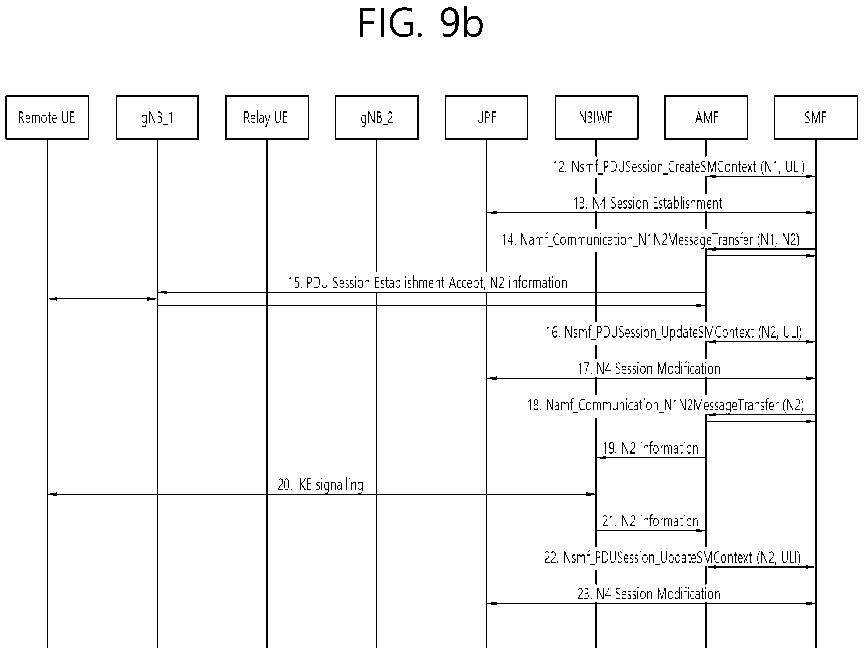

**FIGS. 9a** **and** **9b** **are exemplary diagrams showing a procedure according to the first embodiment.**

The Remote UE may create an indirect path with the Relay UE. After that, the Remote UE may establish MA PDU session to perform redundant transmission after registering with the network through N3IWF.
1. The Remote UE and the Relay UE may register with 5GC through 3GPP access. During this process or through preconfiguration, the Remote UE and the Relay UE may be configured with RSCs to be used by applications requiring redundant transmission and PDU session parameters (e.g. DNN/S-NSSAI) mapped to the RSC. The RSCs to be used by applications requiring redundant transmission and PDU session parameters (e.g. DNN/S-NSSAI) mapped to the RSC may be configured in the same manner in the URSP rule. Therefore, the RSD of the URSP rule matching the application may have DNN/S-NSSAI in the PDU session parameters. Also, the Remote UE may be configured to use the MA PDU session for the application by the URSP rule. For example, the RSD of the URSP rule matching the application may have "multi-access preference type" set.
2. After the Relay UE discovery, the Remote UE may determine to establish MA PDU session by selecting the Relay UE based on the ProSe authorization policy of step 1 and the URSP rule configuration and/or implementation, and may transmit a DCR (Direct Communication Request) message to the Relay UE. The DCR message may include an RSC (relay service code).
3. The Relay UE may establish a PDU session for transmitting the Remote UE traffic based on the RSC received from the Remote UE. The Relay UE may transmit a PDU Session Establishment Request message to gNB_2 for transmitting Remote UE traffic based on RSC. The gNB_2 may forward the PDU Session Establishment Request message to AMF. The PDU Session Establishment Request message may include DNN/S-NSSAI. The PDU session to be established in this step may be a PDU session for an indirect path. The indirect path may be a path through relay of a relay UE between the remote UE and the network.

Step 3 may be performed before the Relay UE receives the DCR message from the Remote UE. The Relay UE may establish a session using PDU session parameters mapped to the RSC when creating a PDU session. For example, the Relay UE may establish a session using DNN X and/or S-NSSAI Y. At this time, if DNN X, S-NSSAI Y are used by the network configuration (NW configuration), both the remote UE and the relay UE may select the same SMF. For example, only one SMF using DNN X, S-NSSAI Y may be registered in the NRF (Network Repository Function).

For example, when the relay UE establishes a PDU session, the AMF may select the SMF using DNN X and/or S-NSSAI Y

4. The AMF may transmit the Nsmf_PDUSession_CreateSMContext Request(N1, ULI) to the SMF.

Through step 3, the AMF may transmit, to the SMF, the PDU Session Establishment Request message transmitted by the relay UE, along with the DNN, S-NSSAI, 'request type = initial', and the ULI information of the relay UE. The AMF may include ULI information of Relay UE in Nsmf_PDUSession_CreateSMContext Request.

Based on this, the SMF may know ULI information of Relay UE (e.g., serving cell information).

5. SMF may create N4 session for PDU session establishment with the UPF.

6. The SMF may transmit the PDU Session Establishment Accept message (N1 information) and the N2 information for PDU session resource setup to the base station.

7. The AMF may transmit the N1, N2 information received from the SMF to the base station. The base station may perform resource setup for the PDU session while transmitting the PDU Session Establishment Accept message to the relay UE.

8. The Relay UE may transmit Direct Communication Accept to the Remote UE. Additional security procedures may be performed after Step 2 and before Step 8. The related procedures may be referred to TS 33.503 V17.0.0.

9. The Relay UE may transmit the Remote UE Report message to transmit information about the Remote UE to the SMF. The Remote UE Report message may be transmitted to the SMF via the AMF. At this time, ULI information about the Relay UE may also be transmitted.

Based on this, the SMF may know the ULI information (e.g. serving cell information) of the Relay UE. At this time, the PRUK ID and UE local IP address corresponding to the information of the Remote UE may be transmitted to the SMF. According to the conventional technology, if the Relay UE does not use N3IWF, for example, if there is an N3IWF access indication in a specific RSC, the Relay UE does not transmit a Remote UE Report. However, here, the Relay UE may transmit a Remote UE Report to the SMF regardless of this.

In Step 4, the ULI information of the Relay UE received by the SMF may be updated with the ULI information of the Relay UE received by the SMF in Step 9.

10. The Remote UE may select N3IWF through the Relay UE and perform non-3GPP access registration. The Remote UE may perform non-3GPP access registration via N3IWF through the session established by steps 3-7 (via indirect path).

11. The Remote UE may transmit PDU Session Establishment Request message to establish MA PDU session. As DNN/S-NSSAI used at this time, DNN X and S-NSSAI Y may be selected by URSP rule configuration. Remote UE may transmit message by setting request type = MA PDU request to indicate that it is a request for MA PDU session. The MA PDU session may be through 3GPP access (direct path) in step 1 and non-3GPP access (indirect path) in step 10.

This example shows that the terminal creates an MA PDU session via a direct 3GPP path, but it can also create an MA PDU session via an indirect non-3GPP path. In addition, after the Remote UE creates an MA PDU session in a situation where there is only a direct path or an indirect path, if a direct path or an indirect path is added later, the Remote UE may perform a procedure for access addition to the MA PDU session, which may follow the prior art.

12. AMF may send Nsmf_PDUSession_CreateSMContext to SMF.

The AMF may send, to SMF, the PDU Session Establishment Request message sent by the Remote UE to SMF, along with DNN, S-NSSAI, 'request type = MA PDU request', and ULI information of the remote UE. Based on this, the SMF may know the ULI information (e.g. serving cell information) of the Remote UE. The AMF may include the ULI information of the Remote UE in Nsmf_PDUSession_CreateSMContext.

According to the conventional technology, the ULI information that the AMF transmits to the SMF transmits the ULI of the access that received the N1/N2 information. For example, when the AMF receives the PDU Session Establishment Request message via 3GPP access, the ULI information of the Remote UE may be the ULI of the 3GPP access. Or, when the AMF receives the PDU Session Establishment Request message through the non-3GPP access, the ULI information of the Remote UE may be the ULI of the non-3GPP access. Therefore, when the remote UE requests the establishment of a MA PDU session through the non-3GPP access, the SMF may not know the ULI of the 3GPP access. However, if the remote UE is registered for both 3GPP/non-3GPP access, the AMF may transmit the ULI for the 3GPP access type together with the ULI for the non-3GPP access type. This is basically to provide NPLI (Network Provided Location Information) information to the IMS (IP Multimedia Subsystem), but it can be configured to always transmit the ULI information for the 3GPP access for the MA PDU session or the session using DNN X, S-NSSAI Y.

Table 3 is the content of TS 23.501 V17.5.0 clause5.6.2. The content of Table 3 may be applied to the embodiments of this specification.

**[Table 3]**

| |
|---|
| In order to support charging and to fulfil regulatory requirement (in order to provide NPLI (Network Provided Location Information)) related with the set-up, modification and release of IMS Voice calls or with SMS transfer the following applies: |
| - At the time of the PDU Session Establishment, the AMF provides the SMF with the PEI of the UE if the PEI is |
| available at the AMF. |
| - When it forwards UL NAS or N2 signalling to a peer NF (e.g. to SMF or to SMSF) or during the UP connection activation of a PDU Session, the AMF provides any User Location Information it has received from the 5G-AN as well as the Access Type (3GPP - Non 3GPP) of the AN over which it has received the UL NAS or N2 signalling. The AMF also provides the corresponding UE Time Zone. In addition, in order to fulfil regulatory requirement (i.e. providing Network Provided Location Information (NPLI), as defined in TS 23.228 [15]) when the access is non-3GPP, the AMF may also provide the last known 3GPP access User Location Information with its age, if the UE is still attached to the same AMF for 3GPP access (i.e. valid User Location Information). |

SMF may determine/decide whether to apply redundant transmission based on the ULI information of the Remote UE, the ULI information of the Relay UE, and the TEID (Tunnel Endpoint Identifier) assigned to the user plane.

Basically, redundant transmission may be used efficiently when a disjoint path is created.

SMF may decide to apply redundant transmission in the following cases:
- When Remote UE and Relay UE are serviced by different cells
- When the user planes of the direct path and the indirect path are set as disjoint paths (SMF may infer whether the user planes of the direct path and the indirect path are different based on the TEID (IP address & port) assigned by the base station and the TEID information assigned by the UPF.)
- When both of the above conditions are met (when the cells are different and the core network section is set as a disjoint path)

Since SMF receives the TEID information assigned by the base station for the MA PDU session through step 16 described below, SMF may later decide whether to allow redundant transmission. For example, the SMF may not transmit the ATSSS rule/N4 rule for redundant transmission to the UE/UPF in steps 13 and 14, and may update the ATSSS rule/N4 rule to initiate redundant transmission later if it decides to allow redundant transmission.

If the SMF does not recognize that the UE is a Remote UE in this step, the SMF may recognize it in step 22 and perform redundant transmission.

13. The SMF may establish N4 session for MA PDU session establishment with the UPF.

14. The SMF may transmit the PDU Session EstablishmentAccept message (N1) and N2 information for resource setup of 3GPP access to the MA PDU session to the base station.

15. The AMF may transmit the N1 and N2 information received from the SMF to the base station. The base station may perform resource setup for the MA PDU session while transmitting the PDU session establishment accept message to the terminal. The base station may allocate a TEID for the downlink and inform the SMF of the allocated TEID through the N2 information. The base station may transmit the allocated TEID to the AMF through the N2 information, and the AMF may transmit it to the SMF.

16. The AMF transmits the N2 information transmitted by the base station to the SMF.

17. The SMF may perform N4 Session Modification to transmit the TEID information of the base station to the UPF. The UPF in this step may be different from the UPF in step 5.

18. The SMF may transmit the N2 information to the AMF. The SMF may transmit the N2 information to the non-3GPP access side for resource setup for the non-3GPP access of the MA PDU session.

19. AMF may transmit N2 information transmitted by SMF to N3IWF.

20. N3IWF may perform resource setup for non-3GPP access through IKE signaling with terminal.

21. N3IWF may allocate TEID for downlink and inform SMF of it through N2 information. N3IWF may transmit the allocated TEID to AMF through N2 information, and AMF may transmit it to SMF.

22. AMF may transmit N2 information transmitted by N3IWF to SMF. At this time, ULI information of N3GPP access may be transmitted. ULI information of N3GPP access may be local IP address + port information of Remote UE.

Based on the information received in step 9, SMF may recognize that Remote UE established MA PDU session through indirect path. Since the SMF may obtain information about the Remote UE after proceeding to step 22, it may decide to perform redundant transmission after this step. (If the terminal registers through N3IWF via Relay UE and requests MA PDU session through non-3GPP access, the SMF can recognize that the terminal is a remote UE at the time when the first MA PDU session request message is transmitted.)

23. The SMF may perform N4 Session Modification for the N3IWF to transmit TEID information to the UPF.

The procedures of Step 2-Step 10 may be procedures related to the indirect path of the remote UE.

The AMF in Step 2-Step 10 may be different from the AMF in Step 11-Step 23.

### II. Second Embodiment

According to the prior art, the Remote UE may receive the serving cell information and TA information of the Relay UE by using the Additional parameters announcement procedure. Alternatively, the Remote UE may obtain the serving cell information of the Relay UE through the Announcement message (when the Model A discovery method is used) or the response message (when the Model B discovery method is used) transmitted by the Relay UE. Alternatively, the Remote UE may obtain the serving cell information of the Relay UE through the PC5-S message.

The Remote UE may transmit, to the base station/network, the serving cell information of the Relay UE while establishing the MA PDU session or through the PDU session establishment/modification procedure after establishing the MA PDU session. The SMF may determine whether to use redundant transmission by considering the ULI information of the Remote UE (e.g., the serving cell information of the Remote UE) and the serving cell information of the Relay UE. For example, the SMF may determine to use redundant transmission when the serving cells of the Remote UE and the Relay UE are different.

Alternatively, the Remote UE may transmit, to the base station/network, information about the Relay UE (e.g., GPSI) instead of the serving cell information of the Relay UE. For this purpose, the Relay UE may provide the GPSI information of the Relay UE to the remote UE during the Relay UE discovery process. For example, in the case of model A, the Relay UE may transmit the GPSI of the Relay UE to the remote UE through an Announcement message. And, in the case of model B, the Relay UE may transmit the GPSI of the Relay UE to the remote UE through a response message to a solicitation message.

Alternatively, the Relay UE may provide its GPSI information to the Remote UE through an Additional parameters announcement procedure. Alternatively, the Remote UE may obtain the GPSI information of the Relay UE through a PC5-S message.

The SMF may know the SUPI information of the Relay UE using the GPSI of the Relay UE provided from the Remote UE. If the same SMF is set to be selected for a specific DNN/S-NSSAI as in the first embodiment, the SMF managing the MA PDU session may know the PDU session information of the Relay UE. For example, the SMF may know the PDU session established by the corresponding UE based on the SUPI of the Relay UE, and among them, the SMF may determine that the PDU session having the same DNN/S-NSSAI as the MA PDU session is a session for relaying the traffic of the Remote UE. In this case, the SMF may know the serving cell information of the Relay UE based on the ULI information transmitted through the PDU session of the Relay UE. Through this, if the serving cells of the Remote UE and the Relay UE are different, the SMF may use redundant transmission. In addition, the SMF may also use the TEID information as described in the first embodiment to determine whether to use redundant transmission by considering whether the CN path of the Remote UE and the CN path of the Relay UE are different or the same.

The network may perform redundant transmission to the Remote UE by using disjoint paths (indirect path and direct path).

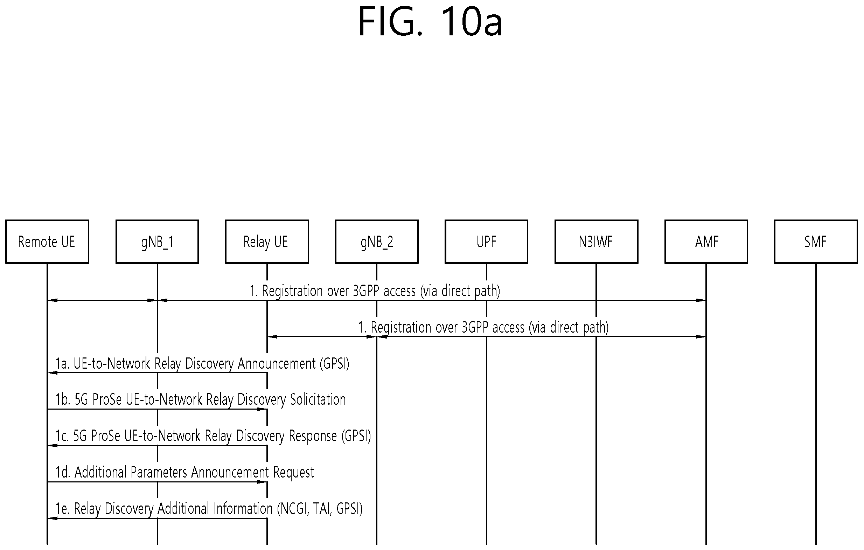

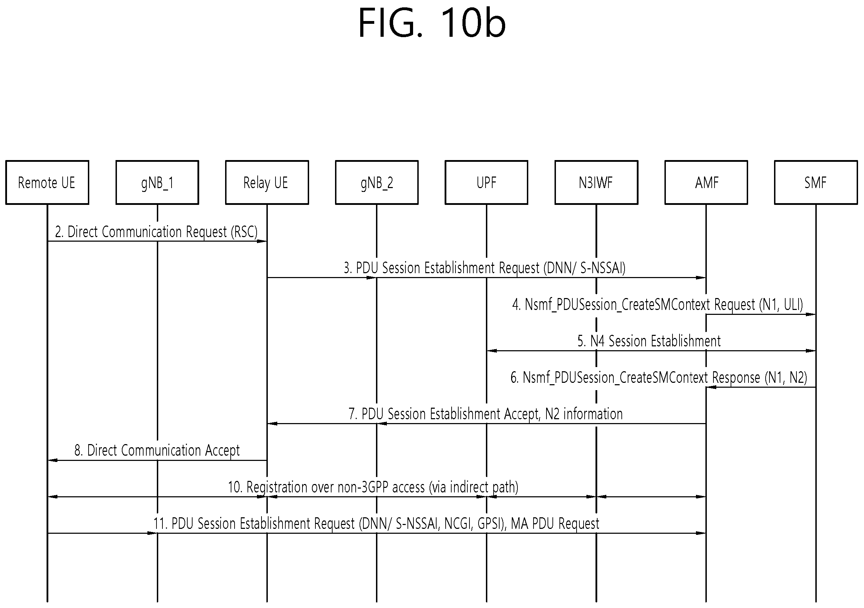

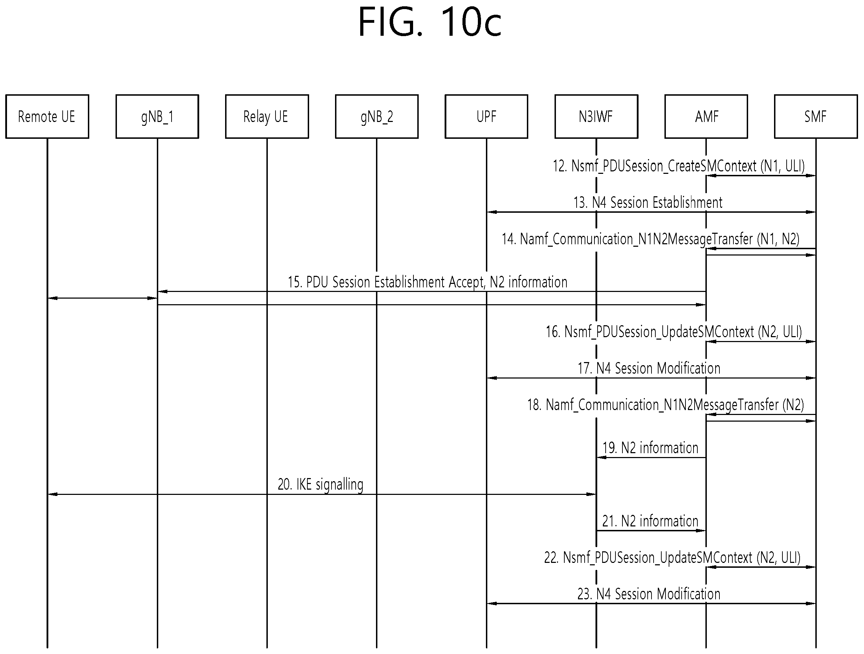

**FIGS. 10a****,** **10b** **and** **10c** **are exemplary diagrams showing a procedure according to the second embodiment.**
1. The Remote UE and the Relay UE may register with 5GC through 3GPP access. During this process or through preconfiguration, the Remote UE and the Relay UE may be configured with RSCs to be used by applications requiring redundant transmission and PDU session parameters (e.g. DNN/S-NSSAI) mapped to the RSC. The RSCs to be used by applications requiring redundant transmission and PDU session parameters (e.g. DNN/S-NSSAI) mapped to the RSC may be configured in the same manner in the URSP rule. Therefore, the RSD of the URSP rule matching the application may have DNN/S-NSSAI in the PDU session parameters. Also, the Remote UE may be configured to use the MA PDU session for the application by the URSP rule. For example, the RSD of the URSP rule matching the application may have "multi-access preference type" set.

1a~1c. Remote UE may perform Relay UE discovery.

In case of Model A, process 1a may be performed. In case of Model B, process 1b~1c may be performed. At this time, unlike the prior art, Relay UE may add its own GPSI information and transmit it to remote UE.

1d~1e. Remote UE may perform additional parameters announcement procedure to obtain serving cell information of Relay UE. Through this, Remote UE may obtain serving cell information of Relay UE. Instead of obtaining GPSI of Relay UE in 1a∼1c, Remote UE may also obtain GPSI of Relay UE in this process.

2. After the Relay UE discovery, the Remote UE may determine to establish MA PDU session by selecting the Relay UE based on the ProSe authorization policy of step 1 and the URSP rule configuration and/or implementation, and may transmit a DCR (Direct Communication Request) message to the Relay UE. The DCR message may include an RSC (relay service code). The remote UE may establish PC5 connection with the relay UE.

3. The Relay UE may create a PDU session for transmitting Remote UE traffic based on the RSC received from the Remote UE. This process may be performed before receiving the DCR message from the Remote UE. When the Relay UE establishes a PDU session, the Relay UE may establish the session using the PDU session parameters mapped to the RSC. For example, the Relay UE may establish a session using DNN X and/or S-NSSAI Y. In this case, if DNN X and S-NSSAI Y are used by the network configuration (NW configuration), both the remote UE and the relay UE may be made to select the same SMF. For example, only one SMF using DNN X and S-NSSAI Y may be registered in the NRF (Network Repository Function).

4. The AMF may transmit the Nsmf_ PDUSession_CreateSMContext Request(N1, ULI) to the SMF.

Through step 3, the AMF may transmit, to the SMF, the PDU Session Establishment Request message transmitted by the relay UE, along with the DNN, S-NSSAI, 'request type = initial', and the ULI information of the relay UE. The AMF may include ULI information of Relay UE in Nsmf_PDUSession_CreateSMContext Request.

Based on this, the SMF may know ULI information of Relay UE (e.g., serving cell information).

5. SMF may create N4 session for PDU session establishment with the UPF.

6. The SMF may transmit the PDU Session Establishment Accept message (N1 information) and the N2 information for PDU session resource setup to the base station.

7. The AMF may transmit the N1, N2 information received from the SMF to the base station. The base station may perform resource setup for the PDU session while transmitting the PDU Session Establishment Accept message to the relay UE.

8. The Relay UE may transmit Direct Communication Accept to the Remote UE. Additional security procedures may be performed after Step 2 and before Step 8. The related procedures may be referred to TS 33.503 V17.0.0.

9. void
10. The Remote UE may select N3IWF through the Relay UE and perform non-3GPP access registration. The Remote UE may perform non-3GPP access registration via N3IWF through the session established by steps 3-7 (via indirect path).

11. The Remote UE may transmit PDU Session Establishment Request message to establish MA PDU session. As DNN/S-NSSAI used at this time, DNN X and S-NSSAI Y may be selected by URSP rule configuration. Remote UE may transmit message by setting request type = MA PDU request to indicate that it is a request for MA PDU session. At this time, the remote UE may transmit the serving cell information and/or GPSI information of the Relay UE obtained in steps 1a to 1e together. The MA PDU session may be through 3GPP access (direct path) in step 1 and non-3GPP access (indirect path) in step 10.

This example shows that the terminal creates an MA PDU session via a direct 3GPP path, but it can also create an MA PDU session via an indirect non-3GPP path. In addition, after the Remote UE creates an MA PDU session in a situation where there is only a direct path or an indirect path, if a direct path or an indirect path is added later, the Remote UE may perform a procedure for access addition to the MA PDU session, which may follow the prior art.

12. AMF may send Nsmf_ PDUSession_CreateSMContext to SMF.

AMF may send, to SMF, PDU Session Establishment Request message (including serving cell information and/or GPSI information of Relay UE) sent by Remote UE to SMF, DNN, S-NSSAI, 'request type = MA PDU request', ULI information of remote UE (etc.). Based on this, SMF may know ULI information of Remote UE (e.g. serving cell information). AMF may include ULI information of Remote UE in Nsmf_PDUSession_CreateSMContext.

According to the conventional technology, the ULI information that the AMF transmits to the SMF transmits the ULI of the access that received the N1/N2 information. For example, when the AMF receives the PDU Session Establishment Request message via 3GPP access, the ULI information of the Remote UE may be the ULI of the 3GPP access. Or, when the AMF receives the PDU Session Establishment Request message through the non-3GPP access, the ULI information of the Remote UE may be the ULI of the non-3GPP access. Therefore, when the remote UE requests the establishment of a MA PDU session through the non-3GPP access, the SMF may not know the ULI of the 3GPP access. However, if the remote UE is registered for both 3GPP/non-3GPP access, the AMF may transmit the ULI for the 3GPP access type together with the ULI for the non-3GPP access type. This is basically to provide NPLI (Network Provided Location Information) information to the IMS (IP Multimedia Subsystem), but it can be configured to always transmit the ULI information for the 3GPP access for the MA PDU session or the session using DNN X, S-NSSAI Y.

The contents of Table 3 may be applied to the embodiments of this specification.

SMF may determine/decide whether to apply redundant transmission based on the ULI information of the Remote UE, the ULI information of the Relay UE, and the TEID (Tunnel Endpoint Identifier) assigned to the user plane.

Basically, redundant transmission may be used efficiently when a disjoint path is created.

SMF may decide to apply redundant transmission in the following cases:
- When Remote UE and Relay UE are serviced by different cells
- When the user planes of the direct path and the indirect path are set as disjoint paths (SMF may infer whether the user planes of the direct path and the indirect path are different based on the TEID (IP address & port) assigned by the base station and the TEID information assigned by the UPF.)
- When both of the above conditions are met (when the cells are different and the core network section is set as a disjoint path)

Since SMF receives the TEID information assigned by the base station for the MA PDU session through step 16 described below, SMF may later decide whether to allow redundant transmission. For example, the SMF may not transmit the ATSSS rule/N4 rule for redundant transmission to the UE/UPF in steps 13 and 14, and may update the ATSSS rule/N4 rule to initiate redundant transmission later if it decides to allow redundant transmission.

13. The SMF may establish N4 session for MA PDU session establishment with the UPF.

14. The SMF may transmit the PDU Session EstablishmentAccept message (N1) and N2 information for resource setup of 3GPP access to the MA PDU session to the base station.

15. The AMF may transmit the N1 and N2 information received from the SMF to the base station. The base station may perform resource setup for the MA PDU session while transmitting the PDU session establishment accept message to the terminal. The base station may allocate a TEID for the downlink and inform the SMF of the allocated TEID through the N2 information. The base station may transmit the allocated TEID to the AMF through the N2 information, and the AMF may transmit it to the SMF.

16. The AMF transmits the N2 information transmitted by the base station to the SMF.

17. The SMF may perform N4 Session Modification to transmit the TEID information of the base station to the UPF. The UPF in this step may be different from the UPF in step 5.

18. The SMF may transmit the N2 information to the AMF. The SMF may transmit the N2 information to the non-3GPP access side for resource setup for the non-3GPP access of the MA PDU session.

19. AMF may transmit N2 information transmitted by SMF to N3IWF.

20. N3IWF may perform resource setup for non-3GPP access through IKE signaling with terminal.

21. N3IWF may allocate TEID for downlink and inform SMF of it through N2 information. N3IWF may transmit, to AMF, the allocated TEID through N2 information, and AMF may transmit it to SMF.

22. AMF may transmit N2 information transmitted by N3IWF to SMF.

23. SMF may perform N4 Session Modification for N3IWF to transmit TEID information to UPF.

The network may perform redundant transmission to Remote UE using disjoint paths (indirect path and direct path).

The procedures of Step 2-Step 10 may be procedures related to the indirect path of the remote UE.

The AMF in Step 2-Step 10 may be different from the AMF in Step 11-Step 23.

The following drawings are created to explain specific examples of this specification. The names of specific devices or names of specific signals/messages/fields described in the drawings are presented as examples, and therefore, the technical features of this specification are not limited to the specific names used in the following drawings.

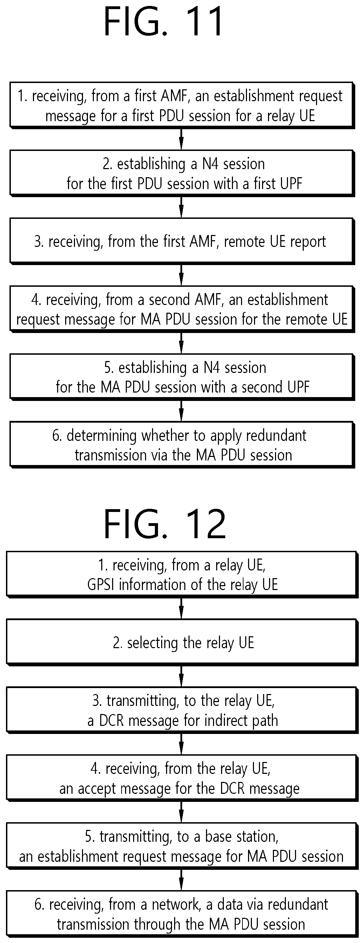

**FIG. 11** **shows the procedure of the SMF for the disclosure of this specification.**
1. The SMF may receive, from a first AMF (Access and Mobility management Function), an establishment request message for a first PDU (Packet Data Unit) session for a relay UE (User Equipment).
2. The SMF may establish a N4 session for the first PDU session with a first UPF (User Plane Function).
   The relay UE may relay indirect path though the first PDU session for the remote UE,
3. The SMF may receive, from the first AMF, remote UE report.
   The remote UE report may include ULI (User Location Information) for the relay UE.
4. The SMF may receive, from a second AMF, an establishment request message for MA (Multi Access) PDU session for the remote UE.
   The MA PDU session may be via non-3GPP (3rd Generation Partnership Project) access by the indirect path and 3GPP access by a direct path.
   The establishment request message for the MA PDU session may include ULI for the remote UE.
5. The SMF may establish a N4 session for the MA PDU session with a second UPF.
6. The SMF may determine whether to apply redundant transmission via the MA PDU session, based on the ULI for the relay UE and the ULI for the remote UE.

The step of determining whether to apply redundant transmission may comprise: determining whether the direct path and the indirect path are disjoint path or not; and determining to apply redundant transmission, based on the determining that the direct path and the indirect path being disjoint path.

The step of determining whether the direct path and the indirect path are disjoint path or not may comprise: determining that the direct path and the indirect path are disjoint path, based on a cell of the direct path and a cell of indirect path are different.

The step of determining whether the direct path and the indirect path are disjoint path or not may comprise: determining that the direct path and the indirect path are disjoint path, based on a TEID (Tunnel Endpoint Identifier) for user plane of the direct path is different from a TEID for user plane of the indirect path.

The ULI of the relay UE may include serving cell information of the relay UE.

The ULI of the remote UE may include serving cell information of the remote UE.

The SMF may receive, from the remote UE, serving cell information of the relay UE.

The step of determining whether to apply redundant transmission may be performed, based on the serving cell information of the relay UE.

The SMF may receive, from the remote UE, GPSI (generic public subscription identifier) information of the relay UE.

The step of determining whether to apply redundant transmission may be performed, based on the GPSI information of the relay UE.

**FIG. 12** **shows the procedure of the remote UE for the disclosure of this specification.**
1. The remote UE may receive, from a relay UE, GPSI (generic public subscription identifier) information of the relay UE.
2. The remote UE may select the relay UE.
3. The remote UE may transmit, to the relay UE, a DCR (Direct Communication Request) message for indirect path.
   The indirect path may be relayed by the relay UE.
4. The remote UE may receive, from the relay UE, an accept message for the DCR message.
5. The remote UE may transmit, to a base station, an establishment request message for MA PDU (Packet Data Unit) session.
   The MA PDU session may be via non-3GPP (3rd Generation Partnership Project) access by the indirect path and 3GPP access by a direct path.
   The establishment request message may include the GPSI of the relay UE.
6. The remote UE may receive, from a network, a data via redundant transmission through the MA PDU session, based on the GPSI of the relay UE.

Hereinafter, an apparatus for performing communication according to some embodiments of the present specification will be described.

For example, the apparatus may include a processor, a transceiver, and a memory.

For example, a processor may be configured to be operably coupled with a memory and a processor.

The processor may perform: receiving, from a firstAMF (Access and Mobility management Function), an establishment request message for a first PDU (Packet Data Unit) session for a relay UE (User Equipment); establishing a N4 session for the first PDU session with a first UPF (User Plane Function); wherein the relay UE relays indirect path though the first PDU session for the remote UE, receiving, from the first AMF, remote UE report; wherein the remote UE report includes ULI (User Location Information) for the relay UE, receiving, from a second AMF, an establishment request message for MA (Multi Access) PDU session for the remote UE; wherein the MA PDU session is via non-3GPP (3rd Generation Partnership Project) access by the indirect path and 3GPP access by a direct path, wherein the establishment request message for the MA PDU session includes ULI for the remote UE, establishing a N4 session for the MA PDU session with a second UPF; determining whether to apply redundant transmission via the MA PDU session, based on the ULI for the relay UE and the ULI for the remote UE.

Hereinafter, a processor for providing communication according to some embodiments of the present specification will be described.

The processor is configured to: receiving, from a first AMF (Access and Mobility management Function), an establishment request message for a first PDU (Packet Data Unit) session for a relay UE (User Equipment); establishing a N4 session for the first PDU session with a first UPF (User Plane Function); wherein the relay UE relays indirect path though the first PDU session for the remote UE, receiving, from the first AMF, remote UE report; wherein the remote UE report includes ULI (User Location Information) for the relay UE, receiving, from a second AMF, an establishment request message for MA (MultiAccess) PDU session for the remote UE; wherein the MA PDU session is via non-3GPP (3rd Generation Partnership Project) access by the indirect path and 3GPP access by a direct path, wherein the establishment request message for the MA PDU session includes ULI for the remote UE, establishing a N4 session for the MA PDU session with a second UPF; determining whether to apply redundant transmission via the MA PDU session, based on the ULI for the relay UE and the ULI for the remote UE.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a first AMF (Access and Mobility management Function), an establishment request message for a first PDU (Packet Data Unit) session for a relay UE (User Equipment); establishing a N4 session for the first PDU session with a first UPF (User Plane Function); wherein the relay UE relays indirect path though the first PDU session for the remote UE, receiving, from the first AMF, remote UE report; wherein the remote UE report includes ULI (User Location Information) for the relay UE, receiving, from a second AMF, an establishment request message for MA (Multi Access) PDU session for the remote UE; wherein the MA PDU session is via non-3GPP (3rd Generation Partnership Project) access by the indirect path and 3GPP access by a direct path, wherein the establishment request message for the MA PDU session includes ULI for the remote UE, establishing a N4 session for the MA PDU session with a second UPF; determining whether to apply redundant transmission via the MA PDU session, based on the ULI for the relay UE and the ULI for the remote UE.

The present specification may have various effects.

For example, through the procedure disclosed in this specification, redundant transmission can be efficiently provided to a remote UE.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a SMF (Session Management Function), comprising:
receiving, from a first AMF (Access and Mobility management Function), an establishment request message for a first PDU (Packet Data Unit) session for a relay UE (User Equipment);
establishing a N4 session for the first PDU session with a first UPF (User Plane Function);
wherein the relay UE relays indirect path though the first PDU session for the remote UE,
receiving, from the first AMF, remote UE report;
wherein the remote UE report includes ULI (User Location Information) for the relay UE,
receiving, from a second AMF, an establishment request message for MA (Multi Access) PDU session for the remote UE;
wherein the MA PDU session is via non-3GPP (3rd Generation Partnership Project) access by the indirect path and 3GPP access by a direct path,
wherein the establishment request message for the MA PDU session includes ULI for the remote UE,
establishing a N4 session for the MA PDU session with a second UPF;
determining whether to apply redundant transmission via the MA PDU session, based on the ULI for the relay UE and the ULI for the remote UE.

2. The method of claim 1,
wherein the step of determining whether to apply redundant transmission comprises:
determining whether the direct path and the indirect path are disjoint path or not; and
determining to apply redundant transmission, based on the determining that the direct path and the indirect path being disjoint path.

3. The method of claim 2,
wherein the step of determining whether the direct path and the indirect path are disjoint path or not comprises:
determining that the direct path and the indirect path are disjoint path, based on a cell of the direct path and a cell of indirect path are different.

4. The method of claim 2,
wherein the step of determining whether the direct path and the indirect path are disjoint path or not comprises:
determining that the direct path and the indirect path are disjoint path, based on a TEID (Tunnel Endpoint Identifier) for user plane of the direct path is different from a TEID for user plane of the indirect path.

5. The method of one of the claims 1 to 4,
wherein the ULI of the relay UE includes serving cell information of the relay UE,
wherein the ULI of the remote UE includes serving cell information of the remote UE.

6. The method of one of the claims 1 to 5, further comprising:
receiving, from the remote UE, serving cell information of the relay UE,
wherein the step of determining whether to apply redundant transmission is performed, based on the serving cell information of the relay UE.

7. The method of one of the claims 1 to 5, further comprising:
receiving, from the remote UE, GPSI (generic public subscription identifier) information of the relay UE,
wherein the step of determining whether to apply redundant transmission is performed, based on the GPSI information of the relay UE.

8. A SMF (Session Management Function), to perform communication, comprising:
a transceiver; and
a processor,
wherein the processor performs operation that is a method of one of the claims 1 to 7.

9. A method for performing communication, performed by a remote UE (User Equipment), comprising:
receiving, from a relay UE, GPSI (generic public subscription identifier) information of the relay UE;
selecting the relay UE;
transmitting, to the relay UE, a DCR (Direct Communication Request) message for indirect path;
wherein the indirect path is relayed by the relay UE,
receiving, from the relay UE, an accept message for the DCR message;
transmitting, to a base station, an establishment request message for MA PDU (Packet Data Unit) session,
wherein the MA PDU session is via non-3GPP (3rd Generation Partnership Project) access by the indirect path and 3GPP access by a direct path,
wherein the establishment request message includes the GPSI of the relay UE,
receiving, from a network, a data via redundant transmission through the MA PDU session, based on the GPSI of the relay UE.

10. A remote UE (User Equipment), to perform communication, comprising:
a transceiver; and
a processor,
wherein the processor performs operation that is a method of the claim 9.

11. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 7.

12. A non-volatile computer readable storage medium having recorded instructions,
wherein the instructions, based on being executed by one or more processors, cause the one or more processors to perform operation that is a method of one of the claims 1 to 7.
